# EUROPEAN PATENT SPECIFICATION

(11) **EP 2 868 528 B1**
(45) Date of publication and mention of the grant of the patent: **26.08.2020**
(21) Application number: 13808496.7
(22) Date of filing: 05.06.2013
(51) Int. Cl.: B60R 16/02, B60K 35/00, G01D 7/00

(54) **VEHICLE DISPLAY DEVICE**
FAHRZEUGANZEIGEVORRICHTUNG
DISPOSITIF D'AFFICHAGE DE VÉHICULE

(30) Priority: 29.06.2012 JP 2012146914
(43) Date of publication of application: 06.05.2015
(73) Proprietor: Nippon Seiki Co., Ltd., Nagaoka-shi, Niigata 940-8580 (JP)
(72) Inventor: SATOH, Takumi, Niigata (JP); KOBAYASHI, Masaru, Niigata (JP)
(74) Representative: Carpmaels & Ransford LLP
(86) International application number: PCT/JP2013/065524
(87) International publication number: WO 2014/002711

(56) References cited:
- JP-A- H1 151 686
- JP-A- 2009 073 431
- JP-A- 2009 179 240
- US-A1- 2008 309 475

## Description

### Technical Field

The present invention relates to a vehicle display device.

### Background Art

Conventionally, a vehicle display device such as described in Patent document 1 is comprised with a meter display means, and an image function include at least one image meter of which on a screen of a display in such a manner that the display of the image function components can be switched between a first display mode and a second display mode providing different display layouts of the image function components, wherein the image function components include at least one image meter, and a display control means that includes a common image function component displayed as a display object in both of the first display mode and the second display mode, and the display mode is switched from the first display mode to the second display mode while or after a moving image showing a transition process of movement of the common image function component from a display position in the first display mode to a display position in the second display mode is displayed as a mode transition animation.

### Citation List

### Patent Literature

Patent Literature 1: Japanese Examined Patent Application Publication No. 4442672

US 2008/309475 A1 describes a first display mode, in which a common image function component is displayed to occupy at least a part of a display region of a second specific image function component. In a second display mode, the common image function component is continuously displayed outside the second specific image function component to avoid the overlap therebetween (i.e., such that an exclusive positional relationship is made therebetween). When the display mode is switched, a final transition of the display mode to a display state in the second display mode is made while or after a moving image showing a transition process, in which the common image function component is moved from a display position in the first display mode to a display position in the second display mode, is displayed as a mode transition animation.

### Summary of invention

### Technical Problem

The vehicle display device described in the patent literature 1 displays the moving image showing a transition process of movement of the moving image and the moving image leave partially the content of the display of the transition states (for example a figure 8 of the same patent literature).

However, the user only require to recognize the moving image of particular transition process and it is not necessary for the user to recognize the content of the moving image while the image is actually moving to different position. Especially like the vehicle display device, most of the user is drivers driving vehicles, it is not only unnecessary for the user to recognize the content of the moving image, but it is intrusive for the user to deal with too much information.

The present invention is to provide a vehicle display according to the subject-matter of claim 1.

### Advantageous Effects of Invention

As described above, according to the present invention, a vehicle display device configures to be excellent in displaying a predetermined image as a moving object and to reduce the user's lord of information awareness.

### Brief Description of Drawings

[Fig. 1] Fig. 1(a) is a top view of a vehicle display device according to a first embodiment of the present invention. Fig. 1(b) is a cross-sectional view of a vehicle display device.
[Fig. 2] Fig. 2 is a block diagram showing an electrical structure of a vehicle display device according to a first embodiment of the present invention.

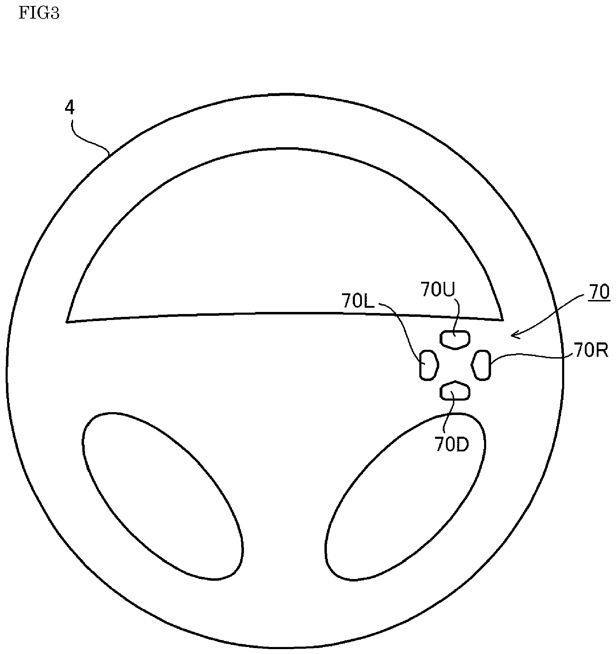

[Fig. 3] Fig. 3 is a figure to explain an example of an operating portion.
[Fig. 4] Fig. 4 (a)-(c) are figures to explain image transition process implemented by a control unit and images displayed in a display device is lined as time series (not part of the invention),
[Fig. 5] Fig. 5 (d)-(g) are continuation of figure 4, (not part of the invention),
[Fig. 6] Fig. 6 (a)-(c) are figures to explain constitution of notification information, (not part of the invention),
[Fig. 7] Fig. 7 is a block diagram to explain another embodiment of the image transition process.
[Fig.8] Fig.8 (a)-(c) are figures to explain another embodiment of image transition process implemented by a control unit and images displayed in a display device is lined as time series.
[Fig.9] Fig 9 (d)-(f) are continuation of figure 8.

### Description of Embodiments

With reference to attached drawings an embodiment of the invention will be described below.

The vehicle display device according to this invention is an instrument device 100 mounted in a vehicle, and the instrument device 100 notifies a user such as driver vehicle information.

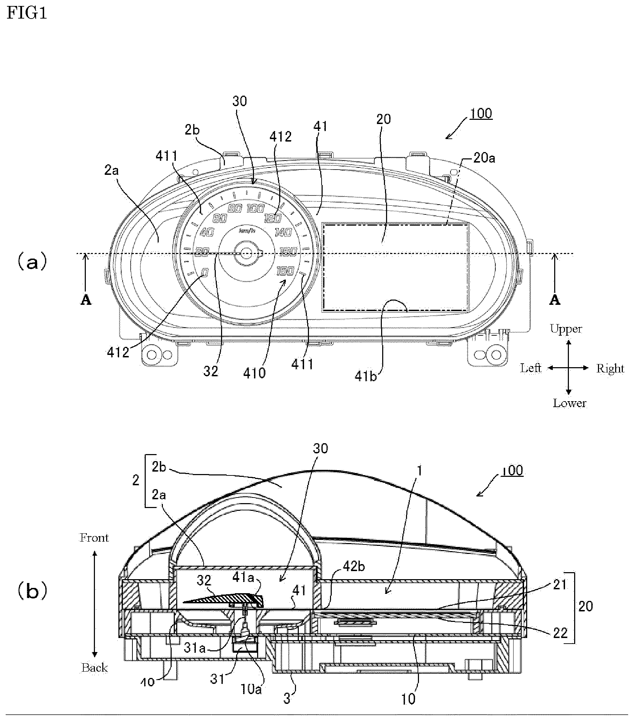

The instrument device 100, shown in the figure 1 (b), including an instrument body 1, a front case 2 and a back case 3. The instrument device 100 is constituted by combining the front case 2 and back case 3 with the instrument body 1 is housed.

In this case "the front" means the user side when looking at the instrument device 100 from front view, in other word the user recognizes vehicle information by looking at the instrument device 100 from front side. Also, "the back" means back side of "the front" (see the figure 1(b)). "The upper side" means the user's head up side, and "lower side" means head down side. The left and right side of the user refer to "left" and "right" (see the figure 1(a)).

The instrument body 1 includes a circuit board 10, a display device 20, a pointer-type instrument 30, a main case 40 and a dial plate 41.

The circuit board 10 is formed of a printed circuit board and the control unit 50 is mounted on. The circuit board 10 is formed of glass epoxy and a hole 10a that an axis of rotation of a motor 31 is formed. The control unit 50 drive controls the display device 20 and motor 31, etc. according to signals (ex. vehicle speed data) supplied by ECU (Electric Control Unit) 60. The detail of the control unit 50 will be explained later on.

The display device 20 is a liquid crystal display that includes a TFT (Thin Film Transistor) type liquid crystal panel 21 and a back light 22 placed behind of the liquid crystal panel 21, and display an image of notification information to a display area 20a. The back light 22 illuminates the liquid crystal panel 21 transparently, and consists of a light guide plate and light source 22a such as Light Emitting Diode (LED). The display device 20 may be consisted of Organic Electro-Luminescence display.

The pointer-type instrument 30 is consisted of the motor 31, a pointer 32 rotated by the motor 31 and an indicating portion 410.

The motor 31 is, for example, a stepping motor and placed behind of the circuit board 10. The motor 31 includes the rotation shaft 31a that extends from the back side of the circuit board 10 to the front side and passes through the hole 10a. The motor 31 rotates the rotation shaft 31a controlled by the control unit 50.

The pointer 32 is mounted to the rotation shaft 31a. The pointer 32 rotates on the surface of the dial plate 41 that is placed front side of the main case 40 and points the indicating portion 410. The dial plate 41 and indicating portion 410 will be explained later on. The control unit 50 receives a speed data and rotates the rotation shaft 31a of the motor 31 according to the speed data. The pointer 32 is able to point the indicating portion 410 with preferable angle according to the speed data. The pointer type instrument 30 notifies the user vehicle speed by contrast of a movement of the pointer 32 over the indicating portion 410.

The main case 40 is made of synthetic resin, the circuit board 10 is mounted at the back side of the main case 40, and the dial plate 41 is mounted at the front side of the main case 40.

The dial plate 41 is configured by forming the indicating portion 410 or the like on a plate-like substrate having a light-transmitting property. For example, the indicating portion 410 configured with a scales 411 and characters (including numbers) 412 of the dial plate 41 and is formed on the substrate. The indicating portion 410 is formed by, e.g., subjecting the substrate to a printing or painting or the like. For example, the indicating portion 410 is formed (in a so-called outline character shape) in such a way that the scales 411 and the characters 412 have a light-transmitting property and peripheries thereof have a light-shielding property. For example, as shown in figure. 1(a), the indicating portion 410 is formed in an arc shape around the rotation shaft 31a. Further, the dial plate 41 is formed with a through hole 41 a and a opening portion 42b. The rotation shaft 31a passes through the through hole 41a. The opening portion 42b is configured to allow the display area 20a of the display device 20 to be seen.

The front case 2, for example shown in figure 1(a), consists of a transmitting member 2a and a shading case 2b. The transmitting member 2a, for example, is formed from visible light transparency glass or synthetic resin. The shading case 2b, for example, is formed from hard blackish synthetic resin and shade light. The transmitting member 2a and the shading case 2b are fitted to each other by protrusions or the like provided in one or both thereof, thereby forming the front case 2.

The back case 3, for example, is formed from hard synthetic resin and formed in a front side open boxed shape. The front case 2 and the back case 3 are combined so as to sandwich the instrument body 1 by protrusions or the like provided in one or both thereof.

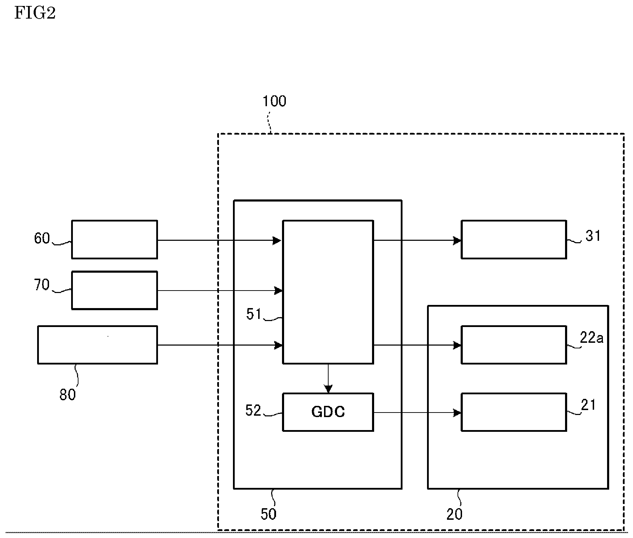

Next, a configuration of the electrical structure of the instrument device 100 will be described in detail with reference to Figure 2. There are the liquid crystal panel 21, light source 22a, motor 31, ECU 60, operation portion 70 and car navigation device 80 are electrically connected to the control unit 50.

The control unit 50 processes controlling of the instrument device 100, and is connected to a microcomputer 51, graphic display controller (GDC) 52, motor 31, liquid crystal display 21, light source 22a with various wirings, and is consisted with various driver integrated circuit (not shown).

The microcomputer 51 is provided with Central Processing Unit (CPU), Read Only Memory (RAM) and input/output interface. The microcomputer 51, for example, CPU reads out certain information which pre-stored in ROM and executes predetermined process (later described image transition process) by using pre-stored image data. RAM functions as a working memory upon CPU processes. The microcomputer 51 is electrically connected to ECU 60, operation portion 70 and car navigation device 80, and receives various information received from ECU 60, operation portion 70 and car navigation device 80. The microcomputer 51 executes process to control the instrument device 100 though electrically connected various drivers IC and GDC 52. GDC 52 executes process to control display motion collaborating with the microcomputer 51. GDC 52 is a controller that is able to draw both vector image and raster image (bitmap image).

ECU 60 measures speed and remaining amount of fuel by sensors and supplies the data to the control unit 50.

The operation portion 70 is, for example, a sterling switch stored in a vehicle which the instrument device 100 is mounted in, and receives operation motions of user (driver) and supplies signals corresponding to the motions to the control unit 50. In detail, the operation portion 70 is placed at the sterling so that the driver can operate while holding the sterling. The operation portion 70 includes upper button 70U, lower button 70D, left button 70L and right button 70R placed to surround a center point. The upper button 70U is placed at upper side of the center point, the lower button 70D is placed at lower side of the center point, the left button 70L is placed at left side of the center point and the right button 70R is placed at right side of the center point. Within those four buttons, one button is pressed down by the driver's finger (for example a thumb) and an operation signal will be sent to the control unit 50. In this embodiment, these buttons will receive operation of transiting a certain image that is displayed in the display area 20a.

The car navigation device 80 is, for example, a car navigation device is mounted in the vehicle with the instrument device 100 is mounted and has audio function. The control unit 50 receives various information (vehicle operational information, audio information, etc.) from the car navigation device 80 and displays images (below, navigation image) that the car navigation device 80 should display to the display device 20 (display area 20a). In this case, the navigation image may be displayed as it is or changed partially.

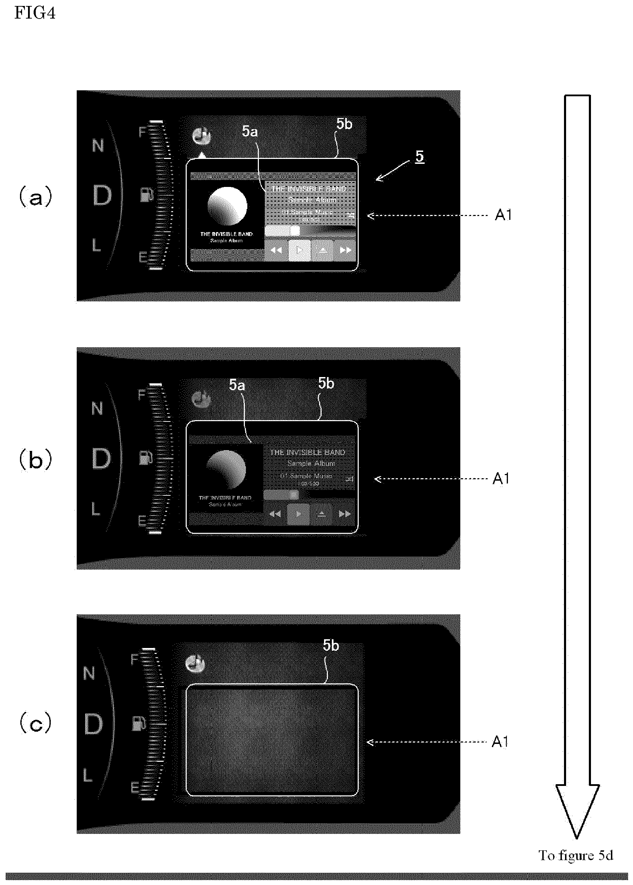

Next, a configuration of the image transition processing of the control unit 50 will be described in detail with reference to Figure 4(a)-4(c), 5(d)-5(g) and 6(a)-6(c), which are not part of the present invention. The control unit 50 stars processing image transition upon receiving a trigger of displaying the navigation image to the display device (the display area 20a) from the external car navigation device 80.

An example of displaying an image shown in figure 4(a) to the display area 20a is described. This displayed image includes a notification image 5 that notifies audio information displayed at position A1 of the display area 20a. The notification image 5 notifies a name of music being played (or being selected) and information about the music (images of recorded album, length of the music). The notification image 5 is displayed based on the information inputted from the car navigation device 80 and is caused by the control unit 50 displaying at the display device 20. The display image, in an area rather than the notification image 5 (left area of the figure), includes gear information (N, D, L, etc.) to notify where the gear is shifted and the fuel meter to notify remaining amount of fuel. These information is displayed on the display device 20 by the control unit 50 based on the information inputted from ECU 60.

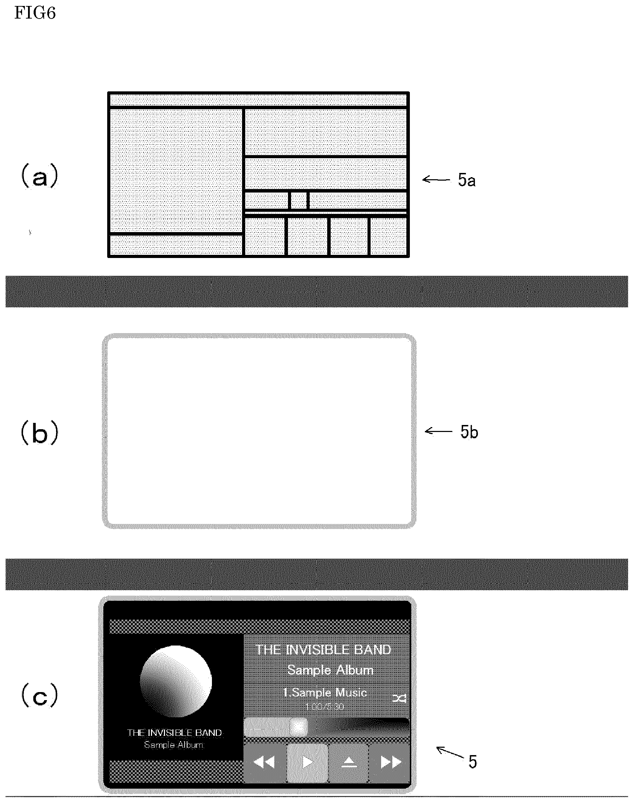

The notification image 5, shown in figure 6(c), is configured with a content image 5a to display a content of the notification image 5 shown in figure 6(a) (the information the notification image 5 must notify) and an outline image 5b to display an outline surrounding the notification image 5 shown in figure 6(b). In this embodiment, the content image 5a is a raster image and the outline image 5b is a vector image. The figure 4(a) describes the content image 5a and outline image 5b are positioned at the position A1. The meaning of positioning at the same position is that one of the coordination of the center of gravity is the same as the other coordination of the center of gravity and the user can recognize the two images are being at the same position.

Figure 4(a) shows that the display device 20 notifying and being displayed in the center of the display area 20a and mainly displays audio information. If the user desires to check other information rather than audio information, the upper button 70U of the operation portion 70 is pressed. The signal according to the pressing the upper button will be sent to the control unit 50 and the control unit 50 will start the process of transiting the notification image 5.

First of all, the control unit 50 controls transition of the display device 20 and erases the content image 5a of the position A1. Specifically, as shown in figure 4(b) and 4(c), the content image 5a is gradually erased by fade-out animation. It should be noted that zoom-out animation (the content image 5a gradually reduce its size and converge at one point) can be used to erase the content image 5a as well.

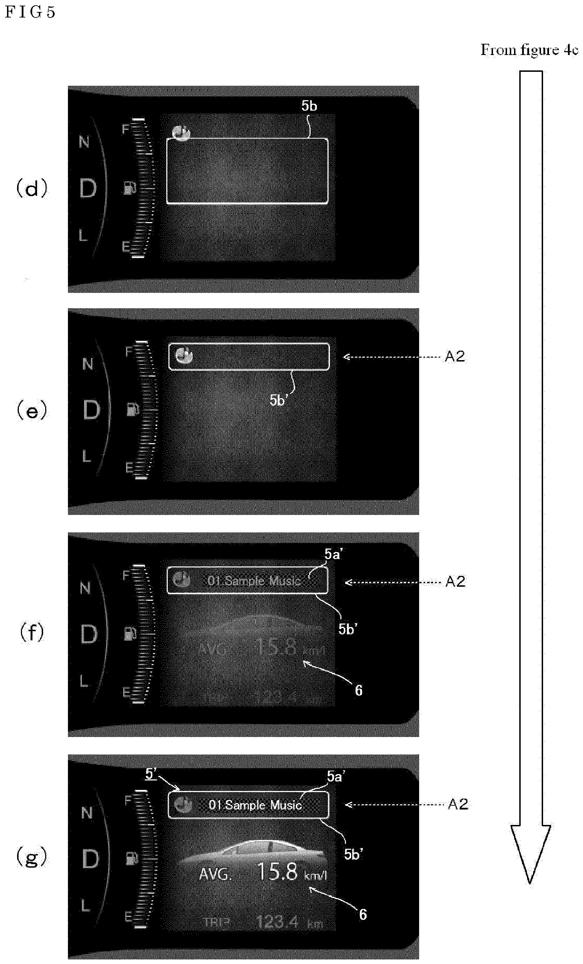

After the content image 5a is erased, the control unit 50 moves the outline image 5b from the position A1 to upper positioned A2. Specifically, as shown in order of figure 4(c), figure 5(d), 5(e) and 5(f), the control unit 50 moves and gradually reduce its size of the vector image of the outline image 5b from A1 to A2. Continuously drawing the outline image 5b and finally displaying reduced size outline image 5b to the position A2 of the display device 20. Not only changing shape of the outline image 5b, but color and brightness also can be changed so that the user can catch changes of displaying status sensuously and better recognize that displaying status is changing (gradually changing color or brightness of the outline image 5b and blinking the outline image 5b etc.)

The control unit 50 after transiting the outline image 5b to the position A2 (in other words, an outline image 5b' is displayed at the position A2), and, as shown in order of figure 5(f) and 5(g), display a content image 5a' which represent part of the content of the content image 5a that was displayed at the position A1. For one example described in figure, the content image 5a' is displaying a name and number of currently played (or selected) music. Specifically, as shown in figure 5(f) and 5(g), the content image 5a' is gradually moved out of the outline image 5b' by fade-in animation. It should be noted that zoom-in animation (the content image 5a gradually expand its size and converge at one point) can be used to display the content image 5a' as well. Also it should be noted that a timing when displaying the content image 5a' can be at same time or slightly after the outline image 5b reaches the position A2. In this way, the notification image 5 positioned at the position A is configured with the content image 5a' and outline image 5b', and is changed to the notification image 5' which share the same content with the notification image 5.

The control unit 50 also displays a notification image 6 to empty display area 20 where the notification image 5 was displayed and transited. This notification image 6 is, for example in figure 5(g), an image of an average speed of a vehicle. This notification image 6, same as the notification image 5', is gradually displayed in fade-in animation or zoom-in animation, etc.

The notification image 5' displayed at the position A2 is displayed slightly less visible than the notification image 5 displayed at the position A1 (for example, the transparency of the notification image 5' is higher than that of the notification image 5). Describing further, the notification image 6 to describe the average speed of the vehicle is more clearly visible than that of the notification image 5' (the notification image 6 is brighter or brighter color). The reason for this is that the above process was enforced when the user prefers information rather than audio information (in a situation the user want to confirm the notification image 6 about average vehicle speed), a priority of displaying audio information should be less than a priority of displaying average vehicle speed information to meet the use's demand.

On the other hand, if the user prefers the audio information, the display can be changed by operating the operation portion 70 in the opposite procedure. The user press down the lower button 70D of the operation portion 70, and the control unit 50 receive the signal of the lower button 70D being pressed and transit the notification image 5' of the position A2 to the position A1 as the notification image 5 in order of figure 5(g), 5(f), 5(e), 5(d), figure 4(c), 4(b) and 4(a).

### (Modification)

Above explanation is for a predetermined image transiting inside of the display area 20a. The instrument device 100 can display an image that was displayed in other display device can transited into the display area 20a. An example will be explained.

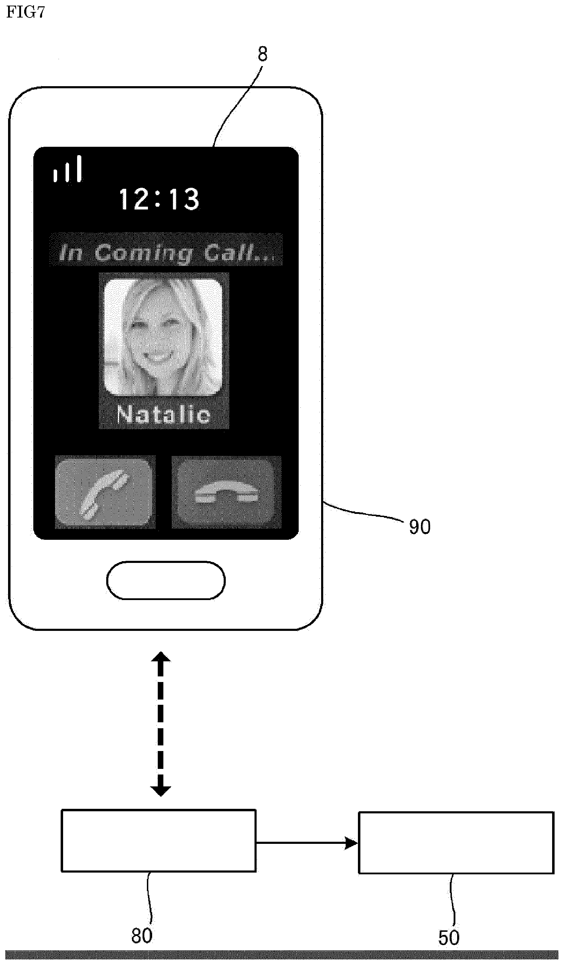

In this modification, an image displayed in the mobile terminal device 90 (for example, smart phone) in figure 7 is displayed so as to be transited to the display device 20 of the instrument device 100. The mobile terminal device 90 is well known so called mobile phone with talk function and web browser. The car navigation device 80 possibly communicates with the mobile terminal device 90 through wired or wireless network (in an example of wireless network, the car navigation device 80 and the mobile terminal device 90 are both Bluetooth compatible and paring models). The instrument device 100 can transit the image 8 of the mobile terminal device 90 to the display device 20 through the car navigation device 80.

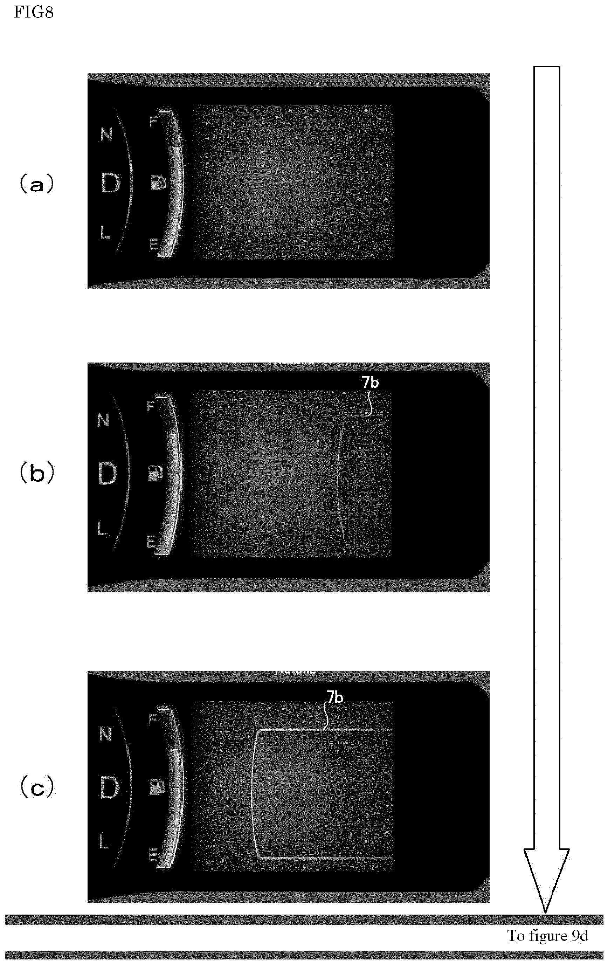

In this modification, a display image being displayed in the display area 20a shown in figure 8(a) is explained. In the condition shown in figure 8(a) the display area 20a has no image of information notification. If the user wants to display a information of incoming phone call received by the mobile terminal device 90 to the display device 20, the user can press down the left button 70L of the operation portion 70. Then, an operational signal corresponding to the left button 70L will be sent to the control unit 50, and the control unit 50 starts a process of displaying at least a part of the image 8 being transited to the display device 20.

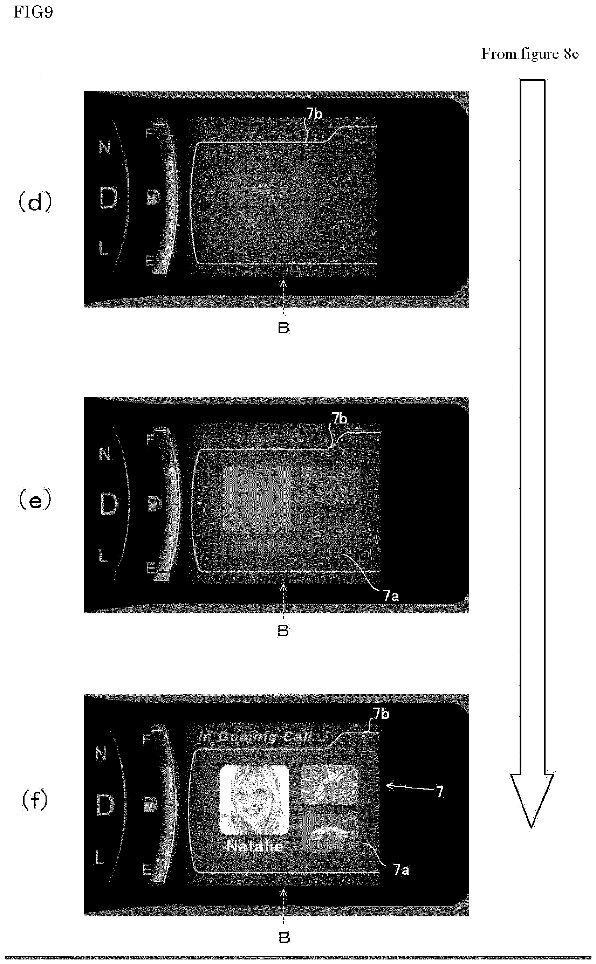

The control unit 50 receives the operational signals and transits the outline (vector) image 7b that represent the outline of the final notification image 7 in order of figure 8(b), 8(c) and figure 9(d) to the target position B from the end right portion of the display area 20a. It is more effective that the color and brightness could be changed for the user to recognize the display has been changed (gradually changing the color and brightness).

After transiting the outline image 7b to the target position B, the control unit 50 displays the content image 7a (raster image) which represent a part of the image was displayed in the mobile terminal device 90 to the target position B. The content image 7a is, for example, to notify there is an incoming call from a particular person. More specifically, the control unit 50 display a part of the content image 7a moves into inside of the outline image7b by the fade-in animation. In this case a part of the content image 7a can be protruding from the outline image 7b (see figure 9e and 9f "In Coming Call").It should be noted that the content image 7a can be gradually displayed by zoom-in animation (for example, the content image 7a expands gradually from one point). The content image 7a can be displayed at the same time or immediately following as the outline image 7b reaches to the target position B. In this way, the image 8 displayed at the mobile terminal device 90 is configured with the content image 7a and outline image 7b, and the user can recognize as if the image 8 was changed to the notification image 7 that shares a part of the content of the image 8.

On the other hand, if the user desires to delete the information regarding to the mobile terminal device 90 from the display device 20 due to finishing of the phone call, opposite procedure of the above mentioned procedure will be followed in order of figure 9(f), 9(e), 9(d), figure 8(c), 8(b), 8(a). In particular, when the user presses down the right button 70R of the operation portion 70 and the control unit 50 receives the control signal regarding the action to the right button 70R, the control unit 50, described in figure 9(f) and 9(e), gradually erases the content image 7a displayed at the target position B by fade-out animation or zoon-out animation. The control unit 50 also frame-out the outline image 7b from the target position B to right end portion. It is effective to change the color and brightness of the outline image 7b.

According to the above described image transition process modification, the control unit 50 not only can starts the process of displaying the notification image 7 due to receiving the signal sent from the operation portion 70, but also starts the process of displaying the notification image 7 in response to receiving a signal from the mobile terminal device 90 through the car navigation device 80 that there is a incoming phone. Regardless of operated by the user, the control unit 50 can erase the notification image 7 in response to receiving a signal of finishing the phone call.

According to the instrument device 100 according to the embodiment and its modified examples described above, rather than the image showing the content of the notification image, subsequent to moving the image showing the outline of a notification image (outline image) for displaying the notification image including the content image, the user can recognize a predetermined image as it is moving. It is possible to reduce the load on the user, since it is an outline image showing the outline (border), appearance of the moving image does not become coarse.

Since it is a vector image, the outline image has the following advantages.

As in the prior art, when an attempt to move a predetermined image by animation using raster image, the image of the moving object is increased for each image to be moved, it is necessary to prepare the image data for animation and the and storage capacity of the storage means such as ROM is increased. Since large image resolution data is large in its amount, it takes time to transit, and it is not reproduced as smooth animation. In order to control the display quality, high control unit of computing power was required.

On the other hand, the outline image of the instrument device 100 is a vector image and expresses the movement of the image. Because it is generated in real time based on the coordinate data, it is possible to reduce the amount of data, and storage capacity the storage means needed is relatively small. Furthermore, by simply changing the number, etc., of the vector image, it is possible to move the outline image and alter the outline of the shape and color and brightness.

In the above embodiments, it is difficult to visually recognize the content image 5a' than the content image 5a, and thereby easier to visually recognize the content image 5a (the notification image 6 and the content image 5a also follow the same principle). Thus, if the priority of notified information is decreased, it is subjected to a cryptocrystalline treatment, and if the priority is increased in reverse, it is subjected to a significant treatment, this also makes it possible to reduce the load on the user's information recognition since information can be appropriately notified to the user.

In the above embodiments and variations, the content image 5a, 5a ', 7a erased gradually, and also, it is made to gradually display the content images. Because it is said that instrument viewing time of the driver is the average 0.3 seconds, the erasing or sudden movement of the image confuse the driver, and it would be the extra information recognized by the driver. However, the instrument device 100 is possible to eliminate or reduce such a road by displaying and erasing the image gradually as described above. Furthermore, by gradually performing as it is possible to feel like the content image and the outline image is smoothly linked, more effectively and smoothly a predetermined image can be displayed as it is moving.

Further, the instrument device 100, the operation direction of the operation portion 70 and the moving direction of the outline image (the moving direction of the notification information) is corresponding (From the position A1, when moving the image to the right of the position A2 than the position A1, pressing the right button 70R located on the right side of the operation portion 70). Thus, since the image is moved in accordance with the request of the user, without having to violate the user's predictions, it is user friendly, also, it is possible to reduce the load of information cognition.

The invention is defined by the set of caims.

In the above description, the vehicle display device is an instrument device 100, although the instrument device 100 is an example which can display information for the car navigation device 80, vehicle display device may be a car navigation device itself. In this case, the control unit of the car navigation device 80 to perform the same image moving process as above.

Also, the instrument device 100 without passing through the car navigation device 80, and may be able to communicate directly with the mobile terminal device 90.

Furthermore, the notification image of a moving object (moving object) displayed on the display area 20a, it is needless to say that it is not limited to audio information. It may be a notification image indicating the back monitor image or the like.

In addition, external image does not have to be a vector image, may be a raster image. However, the vector image is preferred because it can reduce the amount of data required. Also, content image is, not only raster image, are configured from the raster image and the vector image.

Moreover, outline image to be actually moved (an example of a graphic image) is not limited to the outline of the content image. It may be a graphic image consisting of other shapes. For example, after moving the lines and other shapes such as a track and display the content image, it is also possible to feel as the notification image of the object to be moved moved. In other words, as long as the user feels the movement of the notification images, graphics are not limited to those showing an outline of the notification image. In this case, graphic images to be actually moved, it is preferably a vector image.

Moreover, the notification image after and before the movement may be displayed to be one may also include the other, (the portion constituting one of the notification image contained in the other notification image), one and the other may be the same. In other words, the content of the notification image after the movement and before the movement, it is sufficient that at least partially common.

The operation portion 70 is not limited the steering switch. Various control switches near the instrument panel, a known operating unit such as an input means having a touch panel for accepting gesture operation may be used. Also in this case, it is preferable that the operation direction for accepting the operating portion and the moving direction of the outline image (direction in which the notification image is moving) is compatible.

In the above description, in order to facilitate the understanding of the present invention, the description of the known technical matters that are not important as appropriate is omitted.

### Industrial Applicability

The invention, for example, a display device mounted on a vehicle, can be applied as an instrument can reduce the load of the user information recognition.

### Reference Signs List

- 100:: instrument device
- 1:: instrument body
- 10:: circuit board
- 20:: display device
- 30:: pointer type instrument
- 50:: control unit
- 70:: operation portion
- 70U:: upper button
- 70D:: lower button
- 70L:: left button
- 70R:: right button
- 80:: car navigation device
- 90:: mobile device
- 4:: steering
- 5, 5', 7:: notification image
- 5a, 5a', 7a:: content image
- 5b, 5b', 7b:: outline image
- A1, A2:: position
- B:: desirable position
- 8:: image

## Claims

1. A vehicle display device comprising:
a display unit (20) configured to display an image inside of a display area;
a control unit (50) configured to control display; and
an first image (8) displayed by an external display device (90) so as to move to a predetermined position of inside of the display area; wherein
the first image (8) displayed by the external display device (90) and a second image (7) displayed in the predetermined position share at least a part of a content in the display area,
the second image (7) is an image displayed based on the information of the content of the first image (8) which the control unit received from the external display device (90), and
the control unit (50) commands the display unit (20) to frame-in a graphic image shows predetermined image from an end portion of the display area of the display unit (20) to the predetermined position and to display the second image (7) at the predetermined position after the graphic image is transited to the predetermined position.

2. The vehicle display device according to claim 1, the control unit further commands the display unit (20) to erase the second image (7) displayed in the predetermined position corresponding to receiving of predetermined information and to frame-out the graphic image from the predetermined position to the end portion.

## Patentansprüche

1. Fahrzeuganzeigevorrichtung, die Folgendes umfasst:
eine Anzeigeeinheit (20), ausgelegt zum Anzeigen eines Bilds im Innern eines Anzeigegebiets;
eine Steuereinheit (50), ausgelegt zum Steuern des Anzeigens; und
ein erstes Bild (8), angezeigt durch eine externe Anzeigevorrichtung (90), um zu einer vorbestimmten Position im Innern des Anzeigegebiets bewegt zu werden; wobei
sich das erste Bild (8), angezeigt durch die externe Anzeigevorrichtung (90), und ein zweites Bild (7), angezeigt an der vorbestimmten Position, zumindest einen Teil eines Inhalts in dem Anzeigegebiet teilen,
das zweite Bild (7) ein Bild ist, das auf der Grundlage der Informationen des Inhalts des ersten Bilds (8), das die Steuereinheit von der externen Anzeigevorrichtung (90) empfangen hat, angezeigt wird, und
die Steuereinheit (50) der Anzeigeeinheit (20) befiehlt, ein Graphikbild, das ein vorbestimmtes Bild zeigt, von einem Endanteil des Anzeigegebiets der Anzeigeeinheit (20) zu der vorbestimmten Position einzublenden und das zweite Bild (7) an der vorbestimmten Position anzuzeigen, nachdem das Graphikbild zu der vorbestimmten Position übertragen wurde.

2. Fahrzeuganzeigevorrichtung nach Anspruch 1, wobei die Steuereinheit der Anzeigeeinheit (20) ferner befiehlt, das zweite Bild (7) zu löschen, das an der vorbestimmten Position, die den empfangenen vorbestimmten Informationen entspricht, angezeigt wird, und das Graphikbild von der vorbestimmten Position zu dem Endanteil auszublenden.

## Revendications

1. Dispositif d'affichage de véhicule comprenant :
une unité d'affichage (20) configurée pour afficher une image à l'intérieur d'une zone d'affichage ;
une unité de contrôle (50) configurée pour contrôler l'affichage ; et
une première image (8) affichée par un dispositif d'affichage externe (90) de manière à se déplacer jusqu'à une position prédéterminée de l'intérieur de la zone d'affichage ; dans lequel
la première image (8) affichée par le dispositif d'affichage externe (90) et une deuxième image (7) affichée à la position prédéterminée partagent au moins une partie d'un contenu dans la zone d'affichage,
la deuxième image (7) est une image affichée en fonction des informations du contenu de la première image (8) que l'unité de contrôle a reçues depuis le dispositif d'affichage externe (90), et
l'unité de contrôle (50) commande à l'unité d'affichage (20) de recentrer une image graphique montrant une image prédéterminée depuis une partie d'extrémité de la zone d'affichage de l'unité d'affichage (20) jusqu'à la position prédéterminée et d'afficher la deuxième image (7) à la position prédéterminée après que l'image graphique a transité jusqu'à la position prédéterminée.

2. Dispositif d'affichage de véhicule selon la revendication 1, l'unité de contrôle commandant en outre à l'unité d'affichage (20) d'effacer la deuxième image (7) affichée à la position prédéterminée en réponse à la réception d'informations prédéterminées et de décentrer l'image graphique depuis la position prédéterminée jusqu'à la partie d'extrémité.
